(19) **Europäisches Patentamt**

**European Patent Office**

**Office européen des brevets**

(11) **EP 1 334 468 B1**

(12) **EUROPÄISCHE PATENTSCHRIFT**

(45) Veröffentlichungstag und Bekanntmachung des Hinweises auf die Patenterteilung:
**15.03.2006 Patentblatt 2006/11**

(51) Int Cl.:
*G06T 1/00* (2006.01)

(21) Anmeldenummer: **01993905.7**

(22) Anmeldetag: **05.11.2001**

(86) Internationale Anmeldenummer:
**PCT/DE2001/004149**

(87) Internationale Veröffentlichungsnummer:
**WO 2002/039380 (16.05.2002 Gazette 2002/20)**

(54) **VERFAHREN UND SYSTEM ZUR REKONSTRUKTION EINER FLÄCHE**

METHOD AND SYSTEM FOR RECONSTRUCTING A SURFACE

PROCEDE ET SYSTEME DE RECONSTRUCTION D'UNE SURFACE

(84) Benannte Vertragsstaaten:
**DE FR GB**

(30) Priorität: **13.11.2000 DE 10056143**
**24.07.2001 DE 10135992**

(43) Veröffentlichungstag der Anmeldung:
**13.08.2003 Patentblatt 2003/33**

(73) Patentinhaber: **SIEMENS AKTIENGESELLSCHAFT**
**80333 München (DE)**

(72) Erfinder:
- **PAPIERNIK, Wolfgang**
  **91077 Neunkirchen (DE)**
- **SINN, Christof**
  **75417 Mühlacker (DE)**
- **KOBBELT, Leif**
  **52074 Aachen (DE)**

(56) Entgegenhaltungen:
| | |
|---|---|
| EP-A- 0 153 556 | WO-A- 00/45237 |
| US-A- 5 886 702 | US-A- 6 016 153 |

- KOBBELT L ET AL: "A GENERAL FRAMEWORK FOR MESH DECIMATION", PROCEEDINGS GRAPHICS INTERFACE '98. VANCOUVER, BC, JUNE 18 - 20, 1998, GRAPHICS INTERFACE, TORONTO: CIPS, CA, VOL. CONF. 24, PAGE(S) 43-50 XP001064700 ISBN: 0-9695338-7-X Seite 47-50; Abbildungen 4-9
- CAMPAGNA S ET AL: "DREIECKSBEZIEHUNGEN, EFFIZIENTE 3D-DARSTELLUNG DURCH HIERARCHISCHE POLYGONMODELLE", CT MAGAZIN FUER COMPUTER TECHNIK, VERLAG HEINZ HEISE GMBH., HANNOVER, DE, NR. 16, PAGE(S) 174-179 XP000767808 ISSN: 0724-8679 Seite 175-179
- KOBBELT L ET AL: "MULTIRESOLUTION HIERARCHIES ON UNSTRUCTURED TRIANGLE MESHES", COMPUTATIONAL GEOMETRY. THEORY AND APPLICATIONS, ELSEVIER SCIENCE, AMSTERDAM, NL, VOL. 14, NR. 1-3, PAGE(S) 5-24 XP001033663 Zusammenfassung

**EP 1 334 468 B1**

**Beschreibung**

Die Erfindung betrifft ein Verfahren und ein System zur Rekonstruktion einer Fläche anhand von mehrdimensionalen Datenpunkten, insbesondere 3D-Datenpunkten, sowie ein Computerprogrammprodukt zur Durchführung des Verfahrens sowie einen mit dem Computerprogrammprodukt programmierten Rechner.

Ein derartiges Verfahren findet beispielsweise Anwendung bei einer Rekonstruktion oder Simulation einer Fläche oder einer Struktur, z. B. einer Oberfläche von einem mittels einer Fräsmaschine zu bearbeitenden Werkstücks. Dazu wird das zu bearbeitende Werkstück üblicherweise mittels eines sogenannten CAD-Systems (CAD = computer aided design system) modelliert. Zur Überprüfung wird dabei eine das Werkstück repräsentierende Kontur anhand von Fräspunkten oder Fräsbahnen visualisiert. Eine derartige lediglich die Oberfläche erfassende Visualisierung ist bezüglich eines komplexen, insbesondere Hinterschnittkonturen aufweisenden Werkstücks unzulänglich und ungenau. Eine Beurteilung der Werkstückkontur ist auf diese Art und Weise nur unzureichend möglich. Insbesondere ist eine Rekonstruktion von dreidimensionalen Flächen nicht ermöglicht.

Aus der internationalen Veröffentlichung WO 00/45237 ist ein Verfahren zum Komprimieren und Rekonstruieren eines ein Objekt repräsentierenden Netzes bekannt.

Aus der Druckschrift "A General Framework for Mesh Decimation", Graphics Interface 1998, Leif Kobbelt, Swen Campagna, Hans-Peter Seidel, ist ein Verfahren zum Komprimieren hochdetaillierter Netze bekannt.

Aus der europäischen Offenlegungsschrift 0 153 556 A2 ist ein Verfahren zur graphischen Darstellung von simulierter Werkstückbearbeitung durch NC-gesteuerte Werkzeugmaschinen bekannt. Dazu werden aus den Daten für das Werkstück, das Werkzeug und den Programmdaten Polygone erzeugt, die das Werkstück sowie das Werkzeug und seine Bahnbewegung darstellen.

Der Erfindung liegt die Aufgabe zugrunde, ein Verfahren zur Rekonstruktion einer Fläche anzugeben, welches in besonders einfacher Art und Weise eine mehrdimensionale Flächenrückführung ermöglicht.

Diese Aufgabe wird durch die in den Ansprüchen 1, 5, 6 und 7 angegebenen Merkmale gelöst. Vorteilhafte Weiterbildungen der Erfindung sind in den Unteransprüchen angegeben.

Die Erfindung geht von der Überlegung aus, dass bei einem Verfahren zur Rekonstruktion oder Simulation einer Fläche, insbesondere eines Werkstücks, Datenpunkte generiert werden, welche die Fläche beschreiben. Dabei sollte die Flächenrekonstruktion ohne geometrische Informationen anhand von Nachbarschaftsbeziehungen der Datenpunkte ermöglicht sein. Dazu wird die Struktur bevorzugt anhand von in einer chronologischen Reihenfolge vorliegenden 3D-Datenpunkten derart beschrieben, dass diese anhand einer Linearinterpolation bearbeitet werden, wobei chronologisch direkt benachbarte 3D-Datenpunkten unverändert bleiben. Als Ausgabe wird vorteilhafterweise ein Flächennetz, insbesondere ein Dreiecksnetz, generiert, das die gegebenen Datenpunkte vernetzt und ursprüngliche Kanten von polygonalen Bahnen als Netzkanten umfasst. Dieses Verfahren wird bevorzugt als "Meshing" bezeichnet, da einzelne Datenpunkte als Masche zu einem Netz gesponnen oder vernetzt werden. Hierdurch ist sichergestellt, dass anhand eines derart gebildeten Netzes, bevorzugt eines Dreiecksnetzes, eine möglichst genaue Flächenkontur nachgebildet wird. Insbesondere ist gewährleistet, dass eine dem Körper oder der Struktur zugrundeliegende Topologie berücksichtigt wird.

Je nach Art und Aufbau der Struktur oder des Körpers, insbesondere bei einem sehr komplexen Körper, welcher eine sehr geringe Schrittweite zwischen benachbarten Datenpunkten aufweist, kommt es zur Generierung einer Vielzahl von Netzen oder Teilnetzen. Zur Vereinfachung und Reduktion der Komplexität werden zweckmäßigerweise Datenpunkte, welche weniger als eine vorgegebene Schrittweite voneinander entfernt sind, zu einem Netzdatenpunkt zusammengefasst, wobei eine vorgebbare Approximationstoleranz berücksichtigt wird. Daraus resultierende, sogenannte degenerierte Dreiecke werden ermittelt und entfernt, wodurch sich in besonders einfacher Art und Weise die Netzkomplexität verringert. Dieses Verfahren wird bevorzugt als "Rasterizing" bezeichnet, da mittels einer Quantisierung von Schrittweiten eine Rasterung erfolgt.

Zur Beschreibung eines sehr komplexen Körpers wird vorteilhafterweise eine Vielzahl von Netzen anhand von Netzdatenpunkten derart miteinander verknüpft, dass Randpolygone unverändert bleiben. Hierdurch ist sichergestellt, dass die Kontur des Körpers, insbesondere dessen Randpunkte, bei der Rekonstruktion oder Simulation unverändert bleiben. Dieses Verfahren wird bevorzugt als "Fusion" bezeichnet, da mittels der Verknüpfung von Netzdatenpunkten Teilflächen des Körpers anhand von zusammengefügten Netzen miteinander verknüpft werden. Die "Fusion" erlaubt somit beispielsweise ein Zusammenfügen von flächig zurückgeführten Teilen des Werkstücks. Dies ist beispielsweise erforderlich, wenn durch Vorhandensein von Nichtkonturverfahrwegen, z. B. Zustellwege, das Werkstück bzw. die 3D-Daten des Werkstücks in einzelne Bearbeitungsteile zerfallen.

Je nach Art und Funktion des jeweiligen Rückführungsverfahrens einer Fläche können die hier beschriebenen Verfahren - "Meshing", "Rasterizing" oder "Fusion" - als eigenständige Verfahren und somit unabhängig voneinander ausgeführt werden. Dies ist insbesondere abhängig von der Art der Eingangsdaten und/oder von dem Grad der zu erreichenden Vernetzung. Für eine möglichst genaue und realitätsnahe Rekonstruktion einer Fläche werden die drei Verfahren stufenweise ausgeführt, wobei mit jedem Verfahrensschritt bedarfsweise die bereitgestellten Daten vervollständigt oder ausgedient werden können.

Bevorzugt wird eines der vorhergehenden Verfahren zur Rekonstruktion einer durch Fräsbahnen gebildeten Kontur eines Werkstücks verwendet. Dabei wird anhand der 3D-Datenpunkte zweckmäßigerweise eine Fräsbahn definiert und die Oberfläche eines gefrästen Werkstücks approximiert. Vorzugsweise ist dazu ein System zur Visualisierung und/oder Transformation eines Datensatzes vorgesehen, welches Mittel zur Rekonstruktion einer Fläche des Körpers umfasst. Beispielsweise ist als System ein CAD-System, z. B. eine programmierbare Rechnereinheit, zur Modellierung des Werkstücks vorgesehen. Das CAD-System insbesondere dessen CAD/CAM-Schnittstelle, stellt dabei ein Computerprogrammprodukt bereit, z. B. ein sogenanntes NC-Programm (nc = numerical control = numerisch gesteuert).

Eine mittels des CAD-System ausgeführte CAD-Modellierung des Werkstücks führt zu NC-Teileprogrammen, d. h. zu 3D-Datenpunkten, welche als Fräsvorschrift des Werkzeugmittelpunkts fungieren. Die Fräsvorschriften liegen dabei typischerweise mäanderförmig bzw. zirkulär vor. Des Weiteren wird bei der CAD-Modellierung ein NC-Teilprogramm generiert, das einer Steuerung mit unterschiedlichen NC-Steuerungskomponenten, z. B. Kompressor, Interpolator, zugeführt wird. Die Visualisierung wird vorteilhafterweise flächig ausgeführt, damit Unzulänglichkeiten der Kontur besser ermittelt werden können. Wird beispielsweise ein nulldimensionaler Fräser, z. B. ein Punktfräser, vorausgesetzt, ergibt sich die Werkstückkontur in diesem Fall als flächig zurückgeführte Fräsermittelpunktsbahn. Bereits anhand dieser lässt sich auf Unzulänglichkeiten in der zu fräsenden Werkstückkontur schließen.

Die Erfindung löst hierbei eine auftretende Flächenrückführungsproblematik in besonders einfacher Art und Weise. Dazu werden anhand des ermittelten Dreiecksnetzes die Fräspunkte interpoliert, welche als Datenpunkte auf dem Flächennetz liegen. Darüber hinaus wird bis auf Randbereiche die Erhaltung der Fräsbahn sichergestellt, d.h. es werden keine Dreiecke auf nichtgegenüberliegenden Fräsbahnen erzeugt. Hierdurch ist sichergestellt, dass bei einer mittels der Interpolation ausgeführten Optimierung des Dreiecksnetzes die Fläche, insbesondere deren Kanten, weitgehend treu nachgebildet werden. Eine auszeichnende Charaktereigenschaft des Verfahrens ist, dass keine Einschränkung bezüglich der Werkstücktopologie gemacht werden müssen. Es sind daher auch Hinterschnittkonturen mittels des Verfahrens zurückführbar.

Die mit der Erfindung erzielten Vorteile bestehen insbesondere darin, dass eine Flächenrückführung ermöglicht ist, bei welcher die Erhaltung von Kanten, wie der einer Fräsbahn, gewährleistet ist. Hierdurch ist eine möglichst gute Konturtreue bei der Nachbildung von Oberflächen eines Körpers gegeben. Insbesondere wird die Körpertopologie hinreichend berücksichtigt, so dass beispielsweise Hinterschnittkonturen eines Fräswerkstücks zurückführbar sind.

Nachfolgend werden Ausführungsbeispiele der Erfindung anhand der Figuren näher erläutert. Es zeigen:

| | |
|---|---|
| Figuren 1 bis 3 | eine schematische Darstellung von verschiedenen Fräsbahnkonfigurationen, |
| Figuren 4 bis 6 | eine schematische Darstellung einer mittels Netztechnik rekonstruierten polygonen Fläche, |
| Figuren 7 bis 8 | eine schematische Darstellung von direkten Nachbarbahnen mit Durchstoßpunkten, |
| Figuren 9 bis 10 | eine schematische Darstellung einer partiell rekonstruierten Fläche und einer bereinigten Fläche, |
| Figur 11 | eine schematische Darstellung einer nicht-monotonen Indexfolge von Verknüpfungspunkten und somit einer inkonsistenten Vernetzung, |
| Figuren 12 bis 13 | eine schematische Darstellung einer teil- bzw. gesamtvernetzten Fläche, |
| Figuren 14 bis 15 | eine schematische Darstellung einer Fläche mit geometrischen Artefakten bzw. einer um die Artefakte bereinigten Fläche, |
| Figur 16 | eine schematische Darstellung einer Fläche mit benachbarten Dreiecken eines Netzes, |
| Figuren 17 bis 20 | eine schematische Darstellung von vernetzten Flächen mit unterschiedlichen Approximationstoleranzen, und |
| Figuren 21 bis 23 | eine schematische Darstellung von benachbarten Teilnetzen und deren Vernetzung miteinander. |

Einander entsprechende Teile sind in allen Figuren mit den gleichen Bezugszeichen versehen.

Die Erfindung wird beispielhaft anhand eines Algorithmus zur Flächenrekonstruktion eines mittels einer Fräsmaschine zu bearbeitenden Werkstücks beschrieben. Der Algorithmus oder das Verfahren ist darüber hinaus auch zur Rekonstruktion von verschiedenen Flächen geeignet.

Bei der Rekonstruktion der Oberfläche des zu fräsenden Werkstücks werden als Datenpunkte, insbesondere 3D-Datenpunkte, diskrete Fräsbahndaten vorgegeben. Zur anschließenden Bearbeitung des Werkstücks werden die Datenpunkte mittels eines NC-Programms chronologisch an die Fräsmaschine übergeben. Mit anderen Worten: Als Datenpunkte werden eine Folge von Punktkoordinaten oder Fräsbahndaten, die die Anfahrpositionen eines Fräskopfes in chronologischer Reihenfolge darstellen, vorgegeben. Als Ausgabe wird mittels des Verfahrens ein Dreiecksnetz generiert, das die gegebenen Datenpunkte vernetzt und die ursprünglichen Kanten der polygonalen Fräsbahn als Teilmenge der Netzkanten umfasst. Außer der Nachbarschaftsbeziehung aufeinanderfolgender Fräsbahnpunkte sind keine weiteren Eingaben, insbesondere geometrischen Zusatzinformationen, erforderlich.

Das Verfahren wird vorteilhafterweise anhand von flächengeometrischen Heuristiken, z. B. Existenz einer Tangentialebene, optimiert. Bevorzugt wird das Verfahren in drei voneinander unabhängigen Phasen unterteilt, die im Folgenden näher erläutert werden. Die Erläuterungen konzentrieren sich auf die grundlegenden Algorithmen. Dabei können die drei Phasen eigenständig oder nacheinander als ein Gesamtverfahren ausgeführt werden.

Phase 1: "Meshing"

Das eigentliche Meshing verbindet zur Rekonstruktion der Fläche die Datenpunkte oder Fräsbahndaten durch Vernetzen von Zwischenräumen zwischen benachbarten Fräsbahnen. Das Resultat ist ein Dreiecksnetz, wobei die Dreiecke jeweils als Tripel von Punktindizes gegeben sind.

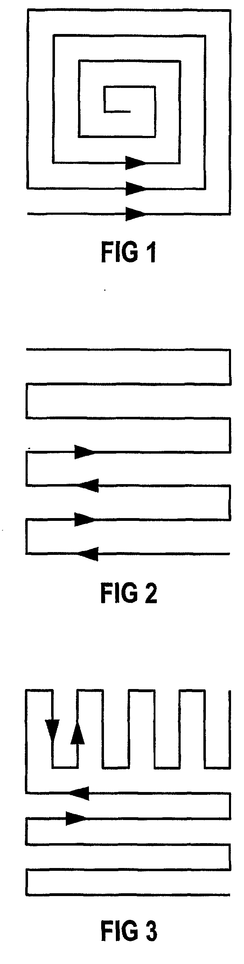

Bei benachbarten Fräsbahnen unterscheidet man grundsätzlich zwischen Spiral-Konfigurationen und Mäander-Konfigurationen. Bei der Spiral-Konfiguration haben beide Fräsbahnen denselben Durchlaufsinn, bei der Mäander-Konfiguration sind sie entgegengesetzt orientiert. Andere Konfigurationen von Fräsbahnen in räumlicher Nähe können beim Wechsel der Fräs-Hauptrichtung auftreten, diese werden dabei nicht wie benachbarte Fräsbahnen behandelt. Daraus resultierende Lücken in der rekonstruierten Fläche können in einer nachfolgenden Phase, z. B. in der "Fusionsphase", geschlossen werden. Die verschiedenen Konfigurationen für benachbarte Fräsbahnen sind beispielhaft in den Figuren 1 bis 3 dargestellt. Für die Vernetzung werden bevorzugt Plausibilitätsannahmen über die Geometrie von Fräsbahnen und Flächen berücksichtigt. Hierzu gehören vor allem Annahmen über den Verlauf benachbarter Fräsbahnen, z. B. Quasi-Parallelität, die deren Identifikation erleichtern. Je nach Vorgabe ist eine derartige einfache Vernetzung der Oberfläche ausreichend zu deren Rekonstruktion.

Phase 2: "Rasterizing"

Alternativ oder zusätzlich kann das in der Meshing-Phase generierte Netz durch das sogenannte "Rasterizing" bearbeitet werden, wodurch sich eine Reduktion der Datenkomplexität und somit eine erleichterte weitere Verarbeitbarkeit ergibt. Insbesondere bei aufwendigeren NC-Programmen oder sehr geringen Schrittweiten entlang der Fräsbahn können die in der Meshing-Phase rekonstruierten Netze sehr komplex werden. Um weiterhin eine einfache und schnelle Verarbeitung der Daten mit einem Computerprogrammprodukt zu ermöglichen, ist die Netzkomplexität zu verringern, wobei der visuelle Eindruck der Fläche weitgehend erhalten bleiben soll. Hierzu werden die Datenpunkte, d.h. die Fräsbahnpunkte, die um weniger als eine vorgegebene Schrittweite $\varepsilon$ voneinander entfernt sind, zu einem einzigen Netzdatenpunkt zusammengefasst. Durch Entfernen hieraus resultierender degenerierter Dreiecke verringert sich die Netzkomplexität. Ein durch die Reduktion verursachter Approximationsfehler kann durch die Größe des Rasters abgeschätzt und als Approximationstoleranz berücksichtigt werden.

Phase 3: "Fusion"

Alternativ oder zusätzlich kann das in der Meshing- und/oder Rasterizing -Phase generierte Netz durch die sogenannte "Fusion" bearbeitet werden, wodurch sich eine nochmals verbesserte Rekonstruktion der Fläche ergibt. Bei der Verarbeitung realer Daten kann beispielsweise ein einzelnes NC-Programm durch Ab- und wieder Aufsetzen des Fräskopfes in mehrere Teilprogramme zerfallen. Außerdem verbleiben nach der Meshing-Phase unter Umständen Lücken in der rekonstruierten Fläche, die durch Wechsel der Fräs-Hauptrichtung verursacht werden. In der Fusionsphase werden diese Teilnetze bevorzugt zu einer Gesamtfläche verbunden. Da es sich bei den Teilnetzen um aus Fräsbahnen rekonstruierte Flächen handelt, verringert sich die Anzahl der möglichen geometrischen Konfigurationen dahingehend, dass betreffende Randpolygone eindeutig zugeordnet werden können.

Beispielhaft ist in der Figur 4 die Rekonstruktion einer polygonalen Fläche aus vorgegebenen Datenpunkten, den Fräsbahndaten, dargestellt. Figur 5 zeigt die eigentliche Vernetzung der Fräsbahnen mittels der Generierung von Dreiecksnetzen anhand vom Meshing ohne Fusion von Teilnetzen. Die Figur 6 zeigt die Fusion mehrerer Teilnetze unter Beibehaltung von Randpunkte repräsentierenden Netzdaten.

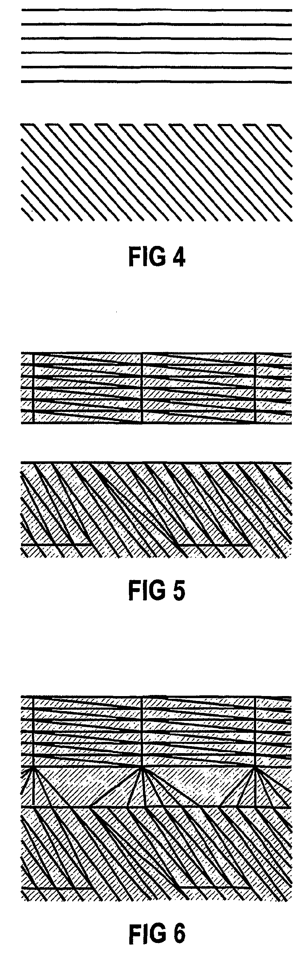

Die wesentliche Aufgabe in der Meshing-Phase nach Figur 5 besteht darin, dass jeder Kante der polygonalen Fräsbahn die entsprechenden Datenpunkte auf den benachbarten Fräsbahnen zu zuordnen sind. Die Vernetzung ist vollständig, wenn jeder Kante der polygonalen Fräsbahn mindestens zwei Dreiecke zugeordnet sind, beispielsweise jeweils eines für die Verbindung zur linken und zur rechten Nachbarbahn. Diese Art der Vernetzung stellt sicher, dass die Kanten der originalen Fräsbahn nach Figur 4 in der Triangulierung enthalten sind. Zusätzliche Dreiecke würden die Flächentopologie zerstören. Der Algorithmus beginnt dabei mit einer Such-Phase, in der initiale Nachbarschaften bestimmt und anhand von Verbindungen erstellt werden. Die initialen Verbindungen werden durch verschiedene Heuristiken zur Verbesserung der Flächenqualität modifiziert. In diesem Zusammenhang werden bevorzugt Heuristiken verwendet, da über das Verhalten der Fläche zwischen den Fräsbahnen keine exakten Aussagen möglich sind. Aus den ermittelten Verbindungen zwischen den Fräsbahnen wird anschließend ein topologisch konsistentes Netz nach Figur 5 generiert. Nachgeschaltete Optimierungen, wie beispielsweise dem Rasterizing oder der Fusion, an der Netzstruktur erhöhen die geometrische Glätte der rekonstruierten Fläche und schließen kleinere Lücken an den Wendepunkten der Fräsbahnen, siehe beispielhaft Figur 6.

Ein Dreiecknetz ist weitgehend vollständig definiert, wenn zu jedem Dreieck oder Datenpunkt (auch Vertex genannt) eine komplette Liste seiner direkten Nachbarn ermittelt ist. Da die vorgegebenen oder ermittelten Punktdaten oder Datenpunkte Pi eine polygonale Fräsbahn repräsentieren, ist a priori für jeden Datenpunkt Pi bekannt, dass der Datenpunkt Pi-1 und der Datenpunkt Pi+1 benachbart sind. Dies resultiert aus der Forderung, dass die Kanten der Fräsbahn eine Teilmenge der Netzkanten im rekonstruierten Dreiecksnetz bilden sollen. Zur vollständigen Flächenrekonstruktion wird die Nachbarschaftsinformation vorteilhafterweise orthogonal zur Fräsbahntangente rekonstruiert. Hierzu werden bevorzugt für jede Kante $\overline{PiPi+1}$ mindestens zwei Dreiecke erzeugt. Am Rand des Werkstücks, d.h. für die erste und die letzte Fräsbahn und deren Umkehrpunkte, wird jeweils mindestens ein Dreieck pro Fräsbahnkante bestimmt. Für eine Kante $\overline{PiPi+1}$ wird ein Dreieck durch einen dritten Punkt Pj auf einer benachbarten Fräsbahn eindeutig bestimmt. Um die Performanz des Algorithmus zu optimieren und die Entstehung von topologischen Inkonsistenzen zu vermeiden, wird nur ein Dreieck pro Kante durch Nachbarschaftssuche bestimmt. Das zweite Dreieck wird zweckmäßigerweise in der eigentlichen Vernetzungsphase durch Rückwärtsverknüpfung ermittelt.

Vorzugsweise wird die Kante $\overline{PiPi+1}$ als Tangente der zu rekonstruierenden Fläche verwendet. Des Weiteren wird eine Mittelebene Ei, die durch einen Punkt Mi = 1/2 (Pi + Pi+1) geht und senkrecht zur betrachteten Kante steht, bestimmt. Die Menge aller Durchstoßpunkte anderer Fräsbahnkanten $\overline{PjPj+1}$ durch die Mittelebene Ei entspricht einer diskreten Schnittkontur der zu rekonstruierenden Fläche. Das durch die Mittelebene Ei definierte Polygon ergibt die orthogonale Tangentenrichtung. Für die Generierung der Nachbarschaftsrelation werden die am nähest gelegenen Durchstoßpunkte ermittelt und mit der Kante $\overline{PiPi+1}$ assoziiert. Pro Fräsbahnkante wird ein Dreieck durch Nachbarschaftssuche bestimmt, beispielsweise durch Aufwärts- oder Abwärtssuche ("up-stream" oder "down-stream"). D.h. die Punkte Pj werden mit j < i oder j > i +1 bestimmt.

Da jede einzelne Fräsbahn aus einer einzigen zusammenhängenden Komponente besteht, ergibt sich zwangsläufig eine starke Kohärenz zwischen räumlicher Nachbarschaft und einem Index-Offset |j -i|. Hierdurch kann der Suchraum für die Nachbarschaftsbestimmung eingeschränkt werden. Beispielsweise ist es ausreichend, innerhalb eines vorgegebenen Fensters Pi+2,...,Pi+r nach dem nähest gelegenen Durchstoßpunkt zu suchen. Alle weiteren Durchstoßpunkte beschreiben weiter entfernte Fräsbahnen und werden nicht berücksichtigt. Die Größe r des Fensters hängt davon ab, wie viele Punkte Pi maximal auf derselben Fräsbahn liegen. Beispielsweise ist ein Maximum s vorgegeben. Für die Spiralkonfiguration mit Spiralbahnen nach Figur 1 wird die Größe r mit r > s vorgegeben. Bei der Mäander-Konfiguration mit sogenannten Ackerfurchen nach Figur 2 wird die Größe r mit r > 2s vorgegeben. Zusätzlich können weitere Informationen bei der Bestimmung der Größe r berücksichtigt werden. Generell kann eine Verringerung der Größe r die Gesamtlaufzeit erheblich beschleunigen; eine Erhöhung der Größe r macht das Verfahren sicherer, insbesondere bei NC-Programmen mit extrem kleiner Schrittweite.

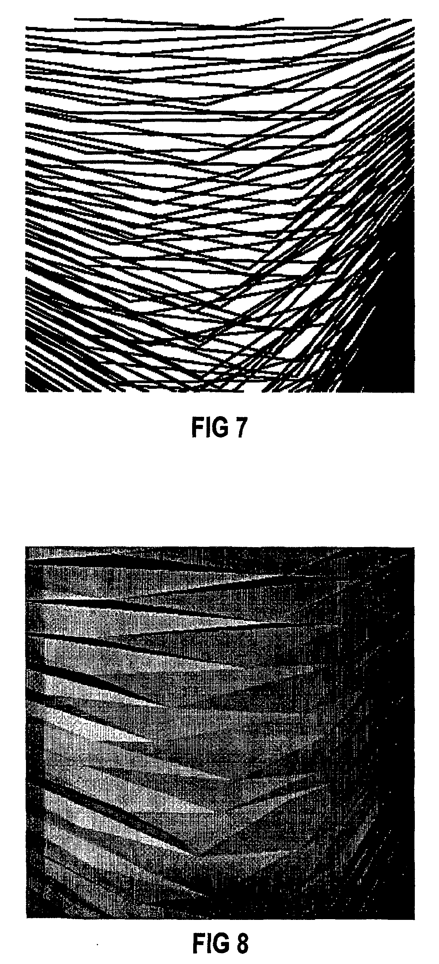

Eine weitere Problematik besteht bei der Nachbarschaftssuche durch Berechnung der Durchstoßpunkte durch die Mittelebene Ei. Zunächst kann bei starker Variation der Flächennormale dieselbe Fräsbahn die Mittelebene Ei erneut schneiden. Zum anderen kann es bei großen Schrittweiten und relativ kleinen Krümmungsradien dazu kommen, dass ein Durchstoßpunkt mit weiter entfernten Fräsbahnen geometrisch näher zur Ausgangskante $\overline{PiPi+1}$ liegt als die Durchstoßpunkte der direkten Nachbarbahnen, siehe beispielsweise Figuren 7 und 8. Zur Vermeidung derartiger "Phasenverschiebungen" wird eine relative Featuregröße λ vorgegeben. Der Wert der relativen Featuregröße λ setzt die Größe der lokal kleinsten Geometrieeigenschaften ins Verhältnis zum lokal größten Abstand zwischen benachbarten Fräsbahnen. Mit anderen Worten: Wenn der lokal größte Abstand zweier benachbarter Fräsbahnen ρ beträgt, dann sind in der Umgebung keine Krümmungsradien kleiner als λ x ρ erlaubt. Dies gilt sowohl in Richtung der Fräsbahn als auch in der orthogonalen Tangentenrichtung. Als Wert der relativen Featuregröße λ wird bevorzugt der empirisch ermittelte und evaluierte Wert λ = 2 verwendet. Ein deutlich kleinerer Wert kann zu fehlerhaften Nachbarschaften bei Fräsbahnen mit großen Schrittweiten und kleinen Radien führen, z. B. bei zerklüfteten Würfelkanten. Ein deutlich größerer Wert kann dazu führen, dass Kanten entlang derselben Fräsbahn verknüpft werden, wenn sehr kleine Krümmungsradien in Richtung der Fräsbahn auftreten.

Nachdem auf die beschriebene Art und Weise für jede Kante $\overline{PiPi+1}$ eine Verknüpfung, d.h. ein Datenpunkt Pj der benachbarten Bahn, ermittelt ist, werden die initialen Verbindungen bereinigt, indem alle Verknüpfungen, die zu extrem langen Dreiecken führen, eliminiert werden. Als Datenpunkt Pj wird insbesondere ein Endpunkt einer Kante $\overline{PjPj+1}$, die die Mittelebene Ei durchstößt, bestimmt. Hierdurch ist der Algorithmus robust gegen eine sub-optimale Wahl der relativen Featuregröße λ.

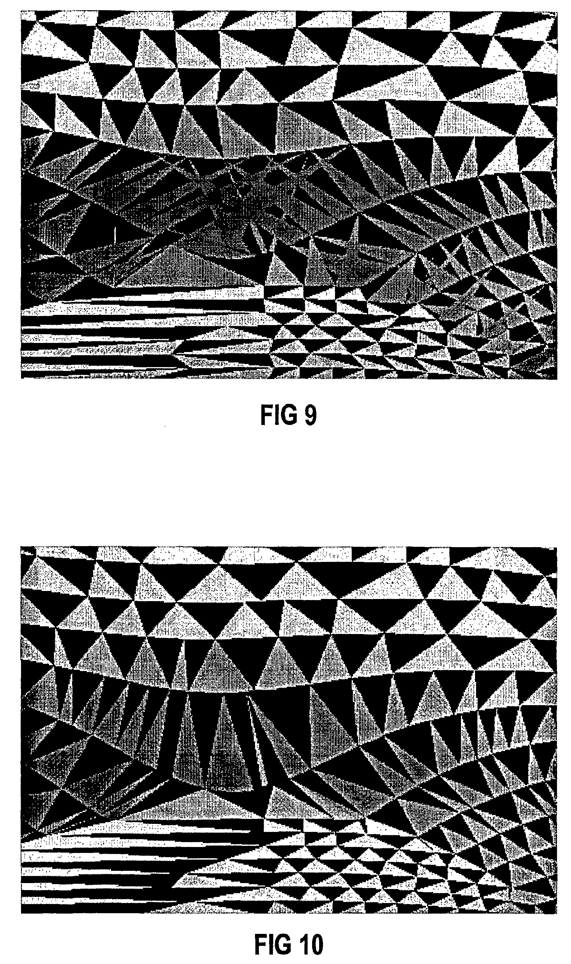

Die initialen Verknüpfungen werden anhand der Durchstoßpunkte einer Kante mit der Mittelebene Ei bestimmt. In manchen Fällen - vor allen bei hoher Flächensteilheit in orthogonaler Tangentenrichtung zur Fräsbahn - kann der bereits gefundene Verknüpfungspunkt noch verbessert werden. Die Suche aus dem ersten Schritt liefert für jede Kante $\overline{PiPi+1}$ einen nahe gelegenen Punkt Pj auf der z. B. down-stream benachbarten Fräsbahn. Dieser muss jedoch nicht unbedingt auch der naheste Punkt Pj auf dieser Bahn sein. In einer zweiten Phase wird daher die gewonnene Verknüpfungsinformation modifiziert, so dass jeder Kante $\overline{PiPi+1}$ genau der Punkt Pj auf der benachbarten Bahn zugewiesen wird, der den geringsten Euklidischen Abstand zum Kantenmittelpunkt Mi hat. Durch diese Nachbesserung können auch evtl. noch vorhandene fehlerhafte Verbindungen innerhalb derselben Fräsbahn eliminiert werden. Beispielhaft ist in den Figuren 9 und 10 die Verbesserung der initialen Verbindungen durch Vermeidung von inkonsistenten Vernetzungen dargestellt. Die verbesserten Verbindungen ergeben sich durch lokale Gradientensuche.
Zur Vermeidung von fehlerhaften Verbindungen wird zweckmäßigerweise eine Konsistenzprüfung durchgeführt. Hierzu werden die entlang einer Fräsbahn und seiner Nachbarbahnen entweder aufsteigend bzw. absteigend nummerierten Datenpunkte dahingehend geprüft, dass für aufeinander folgende Fräsbahnkanten die Indizes ihrer Verknüpfungspunkte ebenfalls eine auf- oder absteigende monotone Folge bilden. Mittels der Konsistenzprüfung werden nicht-monotone Index-Sequenzen bei den Verknüpfungspunkte eliminiert. Des Weiteren werden nicht-monotone Index-Sequenzen an Umkehrpunkten einer mäanderartigen Fräsbahnkante ggf. als korrekt berücksichtigt. Werden diese Verknüpfungspunkte versehentlich eliminiert, können daraus resultierende Lücken in der Fläche in einer späterer Phase, z. B. durch Fusion, wieder geschlossen werden.

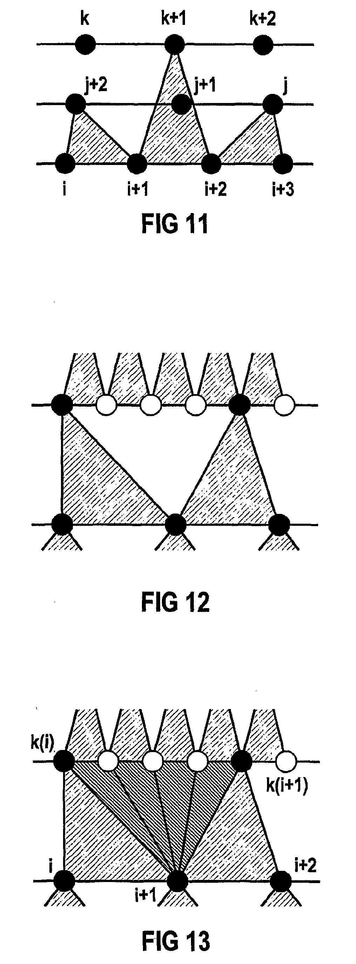

Nach Abschluss der Konsistenzprüfung ist jeder Kante $\overline{PiPi+1}$ entweder ein Verbindungspunkt Pk(i) mit k(i) > i für down-stream zugeordnet, oder es konnte kein entsprechender Punkt auf der benachbarten Fräsbahn gefunden werden. Die Figuren 9 und 10 zeigen ein Beispiel für eine bereits partiell rekonstruierte Flächengeometrie. Für die Vernetzung werden darüber hinaus die up-stream orientierten Dreiecke für jede Kante bestimmt. Dabei wird hierfür zweckmäßigerweise derselbe Algorithmus verwendet wie für die down-stream Verknüpfung. Bevorzugt wird aus Effizienzgründen ein die topologische Konsistenz des resultierenden Dreiecksnetzes berücksichtigender Algorithmus verwendet, wie er beispielhaft in den Figuren 11 und 12, 13 dargestellt ist. Die Figur 11 zeigt eine nicht-monotone Indexfolge der Verknüpfungspunkte [j +2; k +1; j] zu drei aufeinanderfolgenden Fräsbahnkanten $\overline{PiPi+1}$, $\overline{Pi+1Pi+2}$ und $\overline{Pi+2Pi+3}$ und somit ein Beispiel für eine inkonsistente Vernetzung. Beispielsweise sind die Datenpunkte Pk(i) und Pk(i+1) die gefundenen Verbindungspunkte für die direkt aufeinander folgenden Fräsbahnkanten $\overline{PiPi+1}$ und $\overline{Pi+1Pi+2}$. Diese Information ist hinreichend, um für die gesamte Teilsequenz des Fräspolygons zwischen den Datenpunkten Pk(i) und Pk(i+1) die "Vorwärts"-Verknüpfung (=up-stream Verbindung) zu bestimmen. Beispielhaft ist dies in der Figur 12 dargestellt. Die Figuren 12 und 13 stellen die in den ersten Phasen rekonstruierte mittels der "Vorwärts"-Verknüpfung erzielte Teilvernetzung bzw. die mittels der "Rückwärts"-Verknüpfung erzielte gesamte Vernetzung dar.
Mittels einer derartigen zweistufigen Vernetzung ist der wesentliche Teil der Flächengeometrie rekonstruiert. Undefinierte Bereiche verbleiben jedoch typischerweise in der Umgebung der Umkehrpunkte einer mäanderförmigen oder Ackerfurchen-Fräsbahn. Dies resultiert zum einen daraus, dass für die Mittelebene Ei der Übergangskante zwischen benachbarten Fräsbahnen keine sinnvollen Durchstoßpunkte ermittelt werden können. Zum anderen können bereits gefundene Verbindungspunkte während der Konsistenzprüfung fälschlicherweise eliminiert werden, da das Monotonitätskriterium nicht erfüllt ist. Die Problemkonfiguration mit den nicht vernetzen Umkehrschleifen wird detektiert, indem durch den Test k(i)-i < μ zunächst das Vorhandensein einer Umkehrschleife ermittelt wird (mit μ = globale Konstante).

Falls das Sub-Polygon Pi+1,...,Pk(i)-1 tatsächlich nicht vernetzt ist, wird ein Fächer zusätzlicher Dreiecke, auch TriangleFan genannt, generiert. Nachdem die Umkehrschleifen verarbeitet sind, zeigt sich, dass noch immer Lücken auftreten können. Diese erscheinen typischerweise als Kerben im Randpolygon der bisher rekonstruierten polyedrischen Fläche. Durch einfaches Bestimmen der Innenwinkel für das Randpolygon können diese Kerben identifiziert werden und durch Ergänzen eines weiteren Dreiecks eliminiert werden. Hierzu wird ein entsprechender Schwellwert durch eine weitere Konstante definiert.

Mit anderen Worten: Es wird zunächst eine grobe Netzstruktur aufgebaut, die sämtliche Nachbarschaftsbeziehungen der einzelnen Dreiecksfacetten umfasst. Mit dieser Information ist es möglich, alle Dreiecke, die einen bestimmten Netzknoten enthalten, zu ermitteln. Insbesondere lassen sich über die Nachbarschaftsrelation auch Randkanten und Randknoten des bisher rekonstruierten Netzes finden. Der Innenwinkel eines Randknotens wird als eine Summe aller angrenzenden Dreiecksinnenwinkel bestimmt.

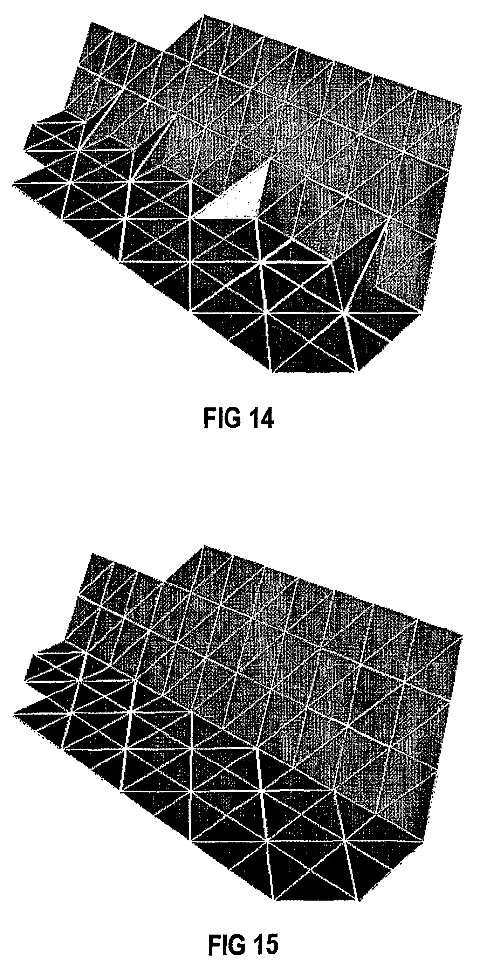

Die vollständig vernetzte Fläche ist nach den ersten Verarbeitungsphasen zwar topologisch konsistent, die rekonstruierte stückweise lineare Geometrie kann aber noch immer geometrische Artefakte enthalten. Diese treten verstärkt an tatsächlichen Knicken in der Originalgeometrie auf, wie sie beispielhaft in der Figur 14 dargestellt ist. Zur Behebung dieser Artefakte werden betreffende Verknüpfungen aus den ersten Phasen revidiert, d.h. die Vernetzung zwischen den Fräsbahnen werden gegebenenfalls modifiziert. Durch eine derartige Nachoptimierung der Vernetzung können geometrische Artefakte an scharfen Kanten der zu rekonstruierenden Fläche reduziert werden. Eine derartig bereinigte Fläche ist in Figur 15 dargestellt.

Hierbei wird jede Netzkante, die zwei Punkte auf benachbarten Fräsbahnen verbindet, als Diagonale eines Vierecks bestimmt, das durch die beiden an die Kante angrenzenden Dreiecke definiert wird. Dabei wird mittels einer sogenannten "Edge-Swap"-Operation eine Kante durch die entsprechende Gegendiagonale in diesem Viereck ersetzt. D.h. beispielsweise seien $\Delta(A, B, C)$ und $\Delta(D, C, B)$ zwei benachbarte Dreiecke, dann ersetzt die "Edge-Swap"-Operation diese beiden Dreiecke durch $\Delta(A, B, D)$ bzw. $\Delta(D, C, A)$. Mittels der "Edge-Swap"-Operation wird die Geometrie der polygonalen Fläche verändert, ohne dabei die Netztopologie zu beeinflussen. Hierdurch ist eine besonders einfache Nachoptimierung gegeben.

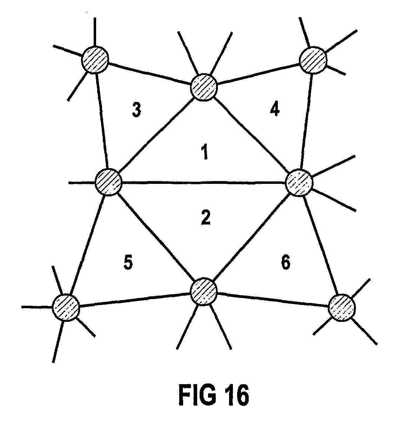

In der Figur 16 sind beispielsweise zwei benachbarte Dreiecke 1 und 2 sowie deren weiteren Nachbardreiecke 3, 4, 5 und 6 dargestellt. Ein gutes Kriterium zur Bewertung der Qualität einer polygonalen Fläche ist der maximale Winkel zwischen den Normalenvektoren benachbarter Dreiecke. Bevorzugt wird ein maximaler Normalenwinkel zwischen $T_i$ und $T_j$ mit $(i,j) \in \{(1,3),(1,4),(2,5),(2,6)\}$ als Qualitätsmaß für die Kante zwischen den Dreiecken 1 und 2 verwendet. Alternativ oder zusätzlich wird die resultierende Qualität nach der "Edge-Swap"-Operation bestimmt. Hat sich die Qualität verbessert, d.h. ist der maximale Normalenwinkel kleiner geworden, wird die "Edge-Swap"-Operation ausgeführt, anderenfalls wird die ursprüngliche Konfiguration beibehalten. Mit anderen Worten: es wird eine sogenannte "Greedy"-Optimierung ausgeführt, indem nacheinander alle Kanten getestet und gegebenenfalls ersetzt werden. Je nach Vorgabe des Optimierungsgrades können mehrere Durchläufe ausgeführt werden.

Zur Reduktion der Netzkomplexität bei großen Datensätzen wird zweckmäßigerweise eine grobe Approximation der Originaldaten ausgeführt, wobei eine vorgegebene Approximationstoleranz eingehalten wird. Da die reduzierten Netzdaten insbesondere der Visualisierung dienen sollen, wird eine besonders einfache und effiziente Reduktionsmethode verwendet. Bevorzugt wird ein sogenannter "Vertex-Clustering"-Algorithmus (= Zusammenfassen oder Gruppieren von Netzdatenpunkten) verwendet. Die Implementierung des Algorithmus kann beliebige Dreiecksnetze verarbeiten und ist nicht auf die Ausgaben des Vernetzungsalgorithmus (= "Meshing") beschränkt.

Beispielsweise ist ein Dreiecksnetz durch eine Menge von Punkten Pi und eine Menge von Dreiecken $T_i = [i1, i2, i3]$ gegeben. Die Indizes i1, i2 und i3 stellen hierbei Referenzen für die Datenpunktliste (= chronologische Reihenfolge vorliegender Datenpunkte, 3D-Datenpunkte) dar und definieren die drei Eckpunkte des Dreiecks Ti. Bei der "Vertex-Clustering"-Methode werden die Punkte Pi zu räumlichen Clustern oder Gruppen zusammengefasst, d.h. Punkte in räumlicher Nähe werden durch einen einzelnen Repräsentanten oder Datenpunkt ersetzt. Hierdurch kann ein Teil der Dreiecke degeneriert werden, wenn mindestens zwei seiner Eckpunkte demselben Cluster oder derselben Gruppe (im weiteren Cluster genannt) zugeordnet werden. Diese degenerierten Dreiecke werden eliminiert und die verbleibenden Dreiecke bilden das resultierende Netz mit reduzierter Komplexität. Die verschiedenen "Vertex-Clustering"-Techniken unterscheiden sich im wesentlichen in der Definition der Cluster und in der Auswahl des Repräsentanten für jeden Cluster. Die einfachste Cluster-Struktur ergibt sich aus einem uniformen Raumraster, in das die Punkte Pi einsortiert werden. Bevorzugt wird eine Rastergröße $\varepsilon$ vorgegeben. Hierdurch ist sichergestellt, dass das Reduktionsverfahren eine Approximationstoleranz von $\sqrt{3}\varepsilon$ aufweist, da dies die maximal mögliche Entfernung zweier Punkte in demselben Cluster ist. Im Computerprogrammprodukt wird die Rastergröße $\varepsilon$ als Programmparameter vor- und ggf. an andere NC-Programmteile übergeben.

Bei der Auswahl des Clusterrepräsentanten können mehrere Alternativen implementiert und ausgetestet werden. Ein möglicher Ansatz, den Mittelpunkt jeder Rasterzelle als Repräsentanten zu wählen, führt zu inakzeptablen Ergebnissen, da die resultierende Fläche extreme Oszillationen der Flächennormalen aufweist. Ersetzt man den Mittelpunkt der Rasterzelle durch den Schwerpunkt aller Punkte im jeweiligen Cluster, verbessert sich die Flächenqualität, springende Normalenvektoren sind aber möglich. Eine wesentliche Verbesserung ergibt sich, wenn man nicht einfach den Schwerpunkt eines Clusters verwendet, sondern denjenigen Cluster-Punkt, der dem Schwerpunkt am nächsten liegt. Hierdurch ist sichergestellt, dass die Punkte im reduzierten Netz stets eine Teilmenge der Originalpunkte bilden. Hierbei ist jedoch zu berücksichtigen, dass bei diesen einfachen Mittelwert-Strategien die Position des Repräsentanten von der Verteilung der Clusterpunkte abhängt. D.h. bei variierender Größe der Dreiecke im Netz wird der Repräsentant in Richtung der höheren Punktdichte verschoben, obwohl viele kleine Dreiecke unter Umständen keine höhere geometrische Signifikanz haben als wenige große. Dieser Effekt wird vorzugsweise anhand von sogenannten Feh-1er-Quadriken reduziert oder behoben.

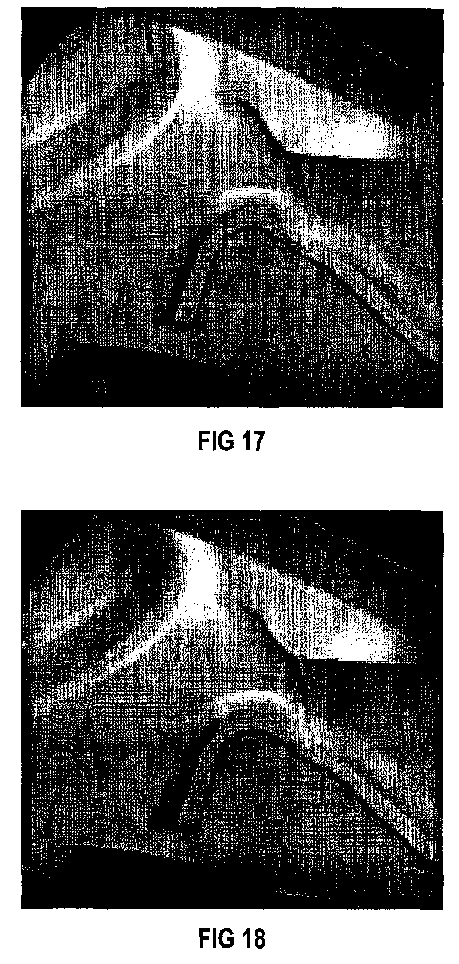

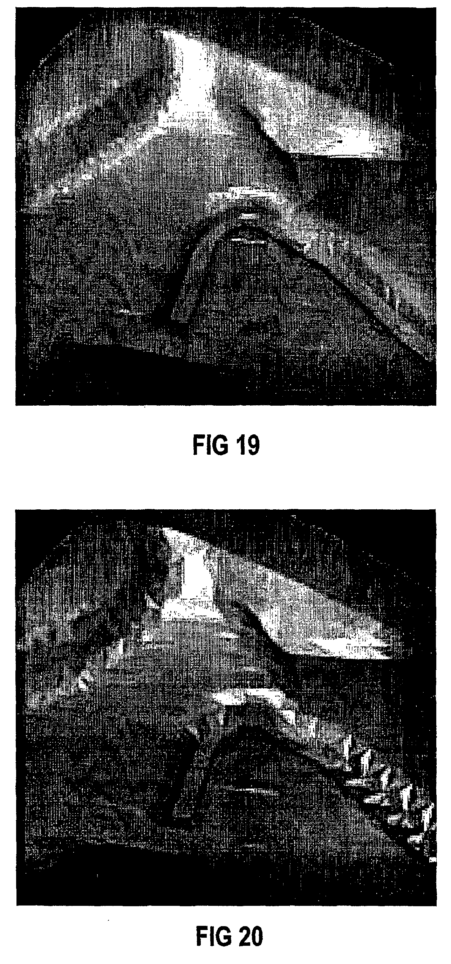

Eine Fehler-Quadrik ist eine quadratische Approximation des tatsächlichen Abstandes eines beliebigen Punktes von der originalen Fläche und repräsentiert die Approximationstoleranz. Dabei wird ein Dreieck Ti mit Normalenvektor ni vorgegeben, wobei ein in der Nähe gelegener Punkt x von Ti den quadratischen Abstand $(n^T_i x - n^T_i a_i)^2$ aufweist, wobei $a_i$ ein beliebiger Eckpunkt des Dreiecks Ti ist. Des Weiteren wird z. B. eine Fehler-Quadrik für jeden Vertex in einem Dreiecksnetz vorgegeben, indem die quadratischen Abstandsfunktionen für alle angrenzenden Dreiecke aufsummiert werden. Liegen bspw. alle angrenzenden Dreiecke in einer Ebene, kann der gemeinsame Punkt innerhalb dieser Ebene verschoben werden, ohne dass sich die Flächengeometrie verändert. Liegt der Punkt auf einer Kante, d.h. alle angrenzenden Dreiecke liegen in zwei verschiedenen Ebenen, so ist eine Verschiebung des Punktes entlang dieser Kante ohne geometrischen Fehler möglich. Im allgemeinen Fall nicht-komplanarer Dreiecke kann der Punkt nicht ohne Verfälschung der Geometrie verschoben werden, aber die Fehler-Quadrik erlaubt zumindest eine Quantisierung des Fehlers in Abhängigkeit von der Verschiebungsrichtung. In den Figuren 17 bis 20 sind verschiedenen Dreiecksnetze mit unterschiedlicher Approximationstoleranz dargestellt. Um die Komplexität der resultierenden Dreiecknetze regulieren zu können, wird eine "Vertex-Clustering"-Technik eingesetzt. Bei den Dreiecksnetzen der Figuren 17 bis 20 beträgt die Approximationstoleranz 0 mm, 1 mm, 2 mm bzw. 4 mm.

Für die Netzreduktion wird die Technik der Fehler-Quadriken verwendet, indem die quadratischen Abstände für alle Dreiecke eines Clusters aufsummiert werden und so eine Quadrik für jeden Cluster ermittelt wird. Im allgemeinen wird diese Quadrik keinen Punkt mehr umfassen, der keinen geometrischen Fehler verursacht, aber zumindest lässt sich ein Punkt finden für den der summierte quadratische Abstand minimal wird ("optimaler Punkt"). Hieraus ergeben sich zwei alternative Definitionen für den Clusterrepräsentanten. Zum einen kann der Clusterpunkt ausgewählt werden, für den die Fehler-Quadrik den geringsten Wert annimmt. Zum anderen kann der Clusterpunkt gewählt werden, der den geringsten Abstand vom optimalen Punkt hat. Dies ist die bevorzugte Ausführungsform.

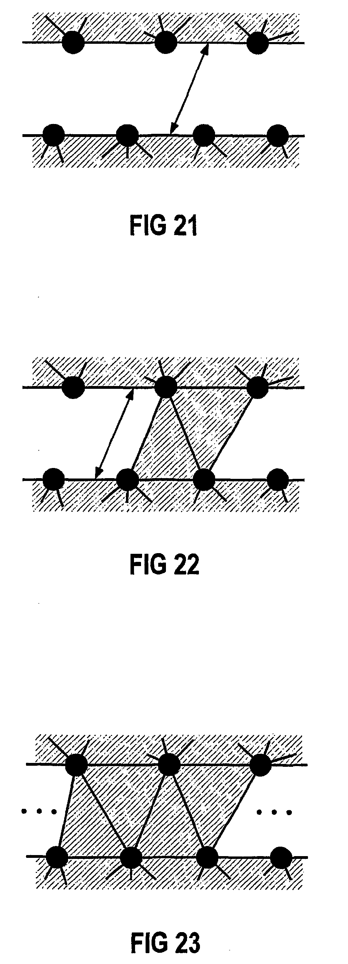

Die Fusion mehrerer Teilnetze wird ähnlich zur eigentlichen Vernetzungsstrategie wie beim Meshing ausgeführt. Dabei wird der Verknüpfungsalgorithmus nicht auf benachbarte Fräsbahnen angewendet, sondern auf die Randpolygone der einzelnen Teilstücke. Genau wie bei den Fräsbahnen wird davon ausgegangen, dass benachbarte Polygone im wesentlichen parallel verlaufen, wodurch die Anzahl zu berücksichtigender Spezialfälle reduziert wird. Durch Protokollieren der Dreiecksnachbarschaften beim Einlesen der Datenpunkte werden zunächst alle Randkanten identifiziert. Dieses sind genau die Kanten, die einem einzigen Dreieck zugeordnet sind. Zum Schließen der Lücken zwischen den Teilnetzen werden gegenüberliegende Randkanten bestimmt und miteinander verbunden. Für die Suche nach gegenüberliegenden Kanten wird ein maximaler Abstand δ vorgegeben (im Computerprogrammprodukt wird der maximale Abstand als Argument übergeben). Durch eine derartige Begrenzung ist sichergestellt, dass die äußeren Ränder der rekonstruierten Fläche nicht verbunden werden, sondern offen bleiben. Die Bestimmung des einer Randkante zuzuordnenden Verknüpfungspunkts wird im wesentlichen wie beim eigentlichen Vernetzungsalgorithmus durch Bestimmen des nächstliegenden Durchstoßpunktes ausgeführt. Zu berücksichtigen ist dabei, dass die vereinfachte Rückwärtsverknüpfung nicht mehr benutzt werden kann, da keine Annahmen über die Indizierung der Randpolygone gemacht werden können. Aus diesem Grund werden einzelne Verknüpfungspunkte ermittelt und Kanten direkt miteinander verbunden, wodurch zwei Dreiecke pro Zuordnungsschritt generiert werden. Die bei einer Verknüpfung entstehenden neuen Kanten werden selbst wieder als Randkanten behandelt. Die Figuren 21 bis 23 stellen zwischen benachbarten Teilnetzen geschlossene Lücken dar, indem "gegenüberliegende" Kanten miteinander verbunden werden.

Im Folgenden wird das Computerprogrammprodukt anhand von Kommandozeilenargumente sowie deren Benutzung in einzelnen NC-Programme beschrieben. Da die jeweiligen Algorithmen automatisch arbeiten, ist keine Benutzerinteraktion notwendig.

Das beispielsweise mit "mesh.c" bezeichnete Programm liest über die Standardeingabe ein Punkte-File ein, führt die Vernetzung durch und schreibt das Resultat wieder als ASCII File auf die Standardausgabe gemäß:

```
mesh <IN_PTS >OUT_TRI                              (1)
```

Die Parameter und Konstanten für den Algorithmus sind auf empirisch ermittelte Default-Werte eingestellt, können aber im Kopf der Source-Code Datei verändert werden. Zur Erhöhung der Flexibilität können die verschiedenen Phasen des Algorithmus einzeln durch die entsprechenden #defines zu- oder abgeschaltet werden, falls bestimmte Optimierungen für spezielle Datensätze nicht erwünscht sind gemäß:

```
#define REMOVE_ABOVE_MEDIAN /**/              (2)
#define ADJUST_TO_CLOSEST /**/
#define DELETE_NON_MONOTONIC /**/
/* #define REMOVE_LONGER_THAN_MAX_EDGE /**/
#define CONNECT_BACKWARDS /**/
#define PROCESS_U_LOOPS /**/
#define FILL_GAPS /**/
#define SWAP_EDGES /**/
```

Ein weiteres mit "raster.c" bezeichnetes Programm ist eine Implementierung des Vertex-Clustering-Algorithmus. Über die #defines lassen sich verschiedene Varianten des Algorithmus einstellen gemäß:

```
/* #define FIND_SVD_POINT /**/                (3)
/* #define FIND_MINIMAL_QUADRIC_ERROR /**/
#define FIND_CLOSEST_TO_CENTER_OF_GRAVITY /**/
#define BAD_RASTER_DEBUG /**/
```

In der Grundversion wird der Rasterrepräsentant durch Mittelwertbildung bestimmt. Die resultierenden Netze zeigen betreffende Treppenartefakte. Eine etwas verfeinerte Methode wird durch

```
/* #define FIND_SVD_POINT /**/                 (4)
#define FIND_MINIMAL_QUADRIC_ERROR /**/
/* #define FIND_CLOSEST_TO_CENTER_OF_GRAVITY /**/
/* #define BAD_RASTER_DEBUG /**/
```

eingestellt. Hierbei wird die originale Oberfläche wesentlich besser approximiert. Die Variante

```
#define FIND_SVD_POINT /**/                     (5)
/* #define FIND_MINIMAL_QUADRIC_ERROR /**/
/* #define FIND_CLOSEST_TO_CENTER_OF_GRAVITY /**/
/* #define BAD_RASTER_DEBUG /**/
```

schließlich liefert die besten Ergebnisse. Das Programm wird gemäß

```
raster IN_PTS IN_TRI EPS OUT_PTS OUT_TRI       (6)
```

aufgerufen. Dabei ist raster.exe der Name des compilierten Programms, IN_PTS ist der Name einer Punkte-Datei und IN_TRI ist der Name einer Dreiecks-Indices-Datei (wie sie von MESH.EXE erzeugt wird). EPS ist ein float-Wert, der die maximal zulässige Approximationstoleranz angibt. Die Ausgabe wird entsprechend in den Dateien OUT_PTS und OUT_TRI gespeichert.

Die Bedienung eines mit "join.c" bezeichneten Programms ist folgendermaßen:

$$\texttt{join IN\_PTS IN\_TRI EPSILON >OUT\_TRI} \qquad (7)$$

Dabei ist IN_PTS eine Liste von Punkten, IN_TRI eine Dreiecksliste und EPSILON eine float-Zahl, die die maximale Größe einer zu schließenden Lücke angibt. Der Wert EPSILON ist notwendig, damit nicht gegenüberliegende Ränder verbunden werden. Dabei wird vorab ermittelt, wie breit die zu erwartenden Lücken sind. Als Ausgabe wird eine neue Dreiecksliste erzeugt, die die alten sowie die neu erzeugten Dreiecke enthält. Falls mehrere getrennt vernetzte Meshes verbunden werden sollen, müssen sie zunächst in ein gemeinsames Mesh mit mehreren Zusammenhangskomponenten konvertiert werden, auf dem dann das JOIN-Programm die Lücken schließt. Dabei sind zwei Punktlisten P1 mit n1 Datenpunkten und P2 mit n2 Datenpunkten vorgegeben. T1 ist die Liste von Dreiecken bzgl. P1 und T2 bzgl. P2. (P1,T1) sowie (P2,T2) bilden also zwei getrennte Netze. Die beiden Punktlisten vereinigt man einfach über: P = [P1; P2]. Bei der Vereinigung der beiden Dreieckslisten müssen noch die Indizes in T2 angepasst werden, d.h. T = (T1; T2+n1] wobei n1 die Länge der Punktliste P1 ist.

Zusammenfassend werden erfindungsgemäß für eine besonders einfache und schnelle sowie mehrdimensionale Flächenrückführung bei einem Verfahren zur Rekonstruktion einer Fläche einer mit in einer chronologischen Reihenfolge vorliegenden 3D-Datenpunkten beschriebenen Struktur 3D-Datenpunkte anhand einer Linearinterpolation derart bearbeitet, dass chronologisch direkt benachbarte 3D-Datenpunkte unverändert bleiben.

**Patentansprüche**

1. Verfahren zur Rekonstruktion einer Fläche einer mit in einer chronologischen Reihenfolge vorliegenden 3D-Datenpunkten beschriebenen Struktur, wobei die 3D-Datenpunkte anhand einer Linearinterpolation derart bearbeitet werden, dass chronologisch direkt benachbarte 3D-Datenpunkte unverändert bleiben, wobei anhand der 3D-Datenpunkte eine Fräsbahn bestimmt wird, wobei die 3D-Datenpunkte derart miteinander verbunden werden, dass Zwischenräume zwischen benachbarten Fräsbahnen vernetzt werden, wobei einer Kante einer polygonalen Fräsbahn zur Vernetzung der Zwischenräume mindestens zwei Dreiecke zugeordnet werden.

2. Verfahren nach Anspruch 1,
   **dadurch gekennzeichnet,**
   **dass** 3D-Datenpunkte, welche weniger als eine vorgegebene Schrittweite voneinander entfernt sind, zu einem Netzdatenpunkt unter Berücksichtigung einer vorgebbaren Approximationstoleranz zusammengefasst werden.

3. Verfahren nach Anspruch 2,
   **dadurch gekennzeichnet,**
   **dass** eine Anzahl von Netzen anhand von Netzdatenpunkte derart miteinander verknüpft werden, dass Randpunkte oder Randpolygone durch die Verknüpfung unverändert bleiben.

4. Verfahren nach einem der vorhergehenden Ansprüche,
   **dadurch gekennzeichnet,**
   **dass** die Dreiecke der Fräsbahn derart zugeordnet werden, dass jeweils eines der Dreiecke die Fräsbahn mit einer der benachbarten Fräsbahnen verbindet.

5. System zur Visualisierung und/oder zur Transformation eines Datensatzes mit Mitteln zur Durchführung eines Verfahrens nach einem der vorhergehenden Ansprüche.

6. Computerprogrammprodukt zur Durchführung eines Verfahrens nach einem der Ansprüche 1 bis 4.

7. Mit einem Computerprogrammprodukt nach Anspruch 6 programmierter Rechner.

**Claims**

1. Method for reconstructing a surface having a structure described by 3-D data points arranged in chronological order, wherein the 3-D data points are processed with a linear interpolation in such a way that chronologically directly adjacent 3-D data points remain unchanged, in which a milling path is determined based on the 3-D data points, the 3-D data points being connected with each another in such a way that gaps between adjacent milling paths are meshed, in that at least two triangles are associated with an edge of a polygonal milling path for meshing the gaps.

2. Method according to claim 1
   **characterised in that**
   3-D data points which are spaced by less than a predetermined step length, are combined to a grid data point by taking into account a predeterminable approximation tolerance.

3. Method according to claim 2
   **characterised in that**
   several grids are connected with each other based on grid data points in such a way that edge points or edge polygons remain unchanged as a result of the connections.

4. Method according to one of the preceding claims,
   **characterised in that**
   the triangles are associated with the milling path in such a way that each triangle connects the milling path with one of the adjacent milling paths.

5. System for visualising and/or transforming a data set with means for carrying out a method according to one of the preceding claims.

6. Computer program for carrying out a method according to one of the claims 1 to 4

7. A computer program with a computer program product according to claim 6.


**Revendications**

1. Procédé de reconstruction d'une surface d'une structure décrite avec des points de données 3D présentés dans un ordre chronologique, dans lequel les points de données 3D sont traités à l'aide d'une interpolation linéaire de telle sorte que des points de données 3D directement voisins chronologiquement restent inchangés, dans lequel une trajectoire de fraisage est déterminée à l'aide des points de données 3D, dans lequel les points de données 3D sont reliés entre eux de telle sorte que des espaces intermédiaires entre des trajectoires de fraisage voisines sont reliés en réseau et dans lequel au moins deux triangles sont associés à une arête d'une trajectoire de fraisage polygonale pour la liaison en réseau des espaces intermédiaires.

2. Procédé selon la revendication 1,
   **caractérisé par le fait que** des points de données 3D qui sont moins éloignés les uns des autres qu'une largeur de pas prescrite sont réunis en un point de données de réseau en tenant compte d'une tolérance d'approximation pouvant être prescrite.

3. Procédé selon la revendication 2,
   **caractérisé par le fait qu'**un certain nombre de réseaux peuvent être combinés entre eux à l'aide de points de données de réseau de telle sorte que des points marginaux ou des polygones marginaux restent inchangés par la combinaison.

4. Procédé selon l'une des revendications précédentes,
   **caractérisé par le fait que** les triangles sont associés à la trajectoire de fraisage de telle sorte que, à chaque fois, l'un des triangles relie la trajectoire de fraisage à l'une des trajectoires de fraisage voisines.

5. Système pour la visualisation et/ou la transformation d'un ensemble de données avec des moyens pour la mise en oeuvre d'un procédé selon l'une des revendications précédentes.

**6.** Produit formant programme informatique pour la mise en oeuvre d'un procédé selon l'une des revendications 1 à 4.

**7.** Ordinateur programmé avec un produit formant programme informatique selon la revendication 6.

FIG 1

FIG 2

FIG 3

**FIG 4**

**FIG 5**

**FIG 6**

FIG 7

FIG 8

FIG 9

FIG 10

**FIG 11**

**FIG 12**

**FIG 13**

FIG 14

FIG 15

**FIG 16**

FIG 17

FIG 18

**FIG 19**

**FIG 20**

FIG 21

FIG 22

FIG 23